**Europäisches Patentamt**

**European Patent Office**

**Office européen des brevets**

(19)

(11) Veröffentlichungsnummer: **0 120 443**
**A2**

(12) ## EUROPÄISCHE PATENTANMELDUNG

(21) Anmeldenummer: **84103056.2**

(22) Anmeldetag: **20.03.84**

(51) Int. Cl.³: **G 06 F 11/26**

(30) Priorität: **25.03.83 DE 3310985**

(43) Veröffentlichungstag der Anmeldung:
**03.10.84 Patentblatt 84/40**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Oberle, Hans-Dieter, Dipl.-Ing.**
**Edelweissstrasse 82**
**D-8039 Puchheim(DE)**

(54) Verfahren und Vorrichtung zur Funktionsprüfung von Schaltungen mit Mikroprozessoren oder Mikrocomputern.

(57) Die Funktionsprüfung erfolgt mit Hilfe eines Signaturanalysators (SA), der an mindestens eine Adreß- und/oder Datenleitung der zu prüfenden Schaltung angeschlossen wird. Ein gesondert erstelltes Prüfprogramm kann entfallen, da aus dem in Echtzeitbetrieb der Schaltung ablaufenden Programm ein reproduzierbarer Programmabschnitt ausgewählt wird und der Beginn und das Ende der im Signaturanalysator (SA) durchgeführten Signatur-analyse entsprechend dem Beginn und dem Ende des reproduzierbaren Programmabschnitts festgelegt werden. Zur Auswahl des reproduzierbaren Programmabschnitts ist dem Signaturanalysator (SA) ein Auswahlglied (A) zugeordnet, bei welchem es sich vorzugsweise um einen Zähler handelt.

FIG 1

SIEMENS AKTIENGESELLSCHAFT
Berlin und München

Unser Zeichen
VPA 83 P 1 2 0 5 E

0120443

Verfahren und Vorrichtung zur Funktionsprüfung von
Schaltungen mit Mikroprozessoren oder Mikrocomputern

Die Erfindung betrifft ein Verfahren zur Funktionsprüfung
von Schaltungen mit Mikroprozessoren oder Mikrocomputern
nach dem Oberbegriff des Patentanspruchs 1, sowie eine
Vorrichtung zur Funktionsprüfung von Schaltungen mit
Mikroprozessoren oder Mikrocomputern nach dem Oberbegriff des Patentanspruchs 4.

Ein häufig eingesetztes Verfahren zur Funktionsprüfung
von Schaltungen mit Mikroprozessoren besteht darin, den
Mikroprozessor zu ziehen und durch eine Prüfvorrichtung
derart zu emulieren, daß die restliche Schaltung gründlich überprüft werden kann. Der gezogene Mikroprozessor
wird außerhalb der Schaltung, ggf. mit derselben Prüfvorrichtung überprüft. Nach dieser gesonderten Überprüfung von restlicher Schaltung und Mikroprozessor wird
dann der Mikroprozessor wieder eingesteckt, wobei die
Möglichkeit eines fehlerhaften Einsteckens nicht ausgeschlossen werden kann. Außerdem ist es denkbar, daß der
Mikroprozessor in der realen Umgebung nicht einwandfrei
arbeitet. Um dieses Restrisiko auszuschalten, müßte also
die komplette Schaltung mit eingestecktem Mikroprozessor
nochmals überprüft werden.

Die Funktionsprüfung kompletter Schaltungen mit Mikroprozessoren oder Mikrocomputern erfolgt im allgemeinen
dadurch, daß der Schaltung ein eigens für die Prüfung
erstelltes Programm eingegeben wird und die Prüfantwort
der Schaltung mit der Sollantwort einer fehlerfreien

Klk 1 Kow / 18.3.1983

Schaltung verglichen wird. Weicht die Prüfantwort dann von der Sollantwort ab, so ist die überprüfte Schaltung fehlerhaft. Bei dieser Funktionsprüfung bedient man sich aus Speicherplatzgründen der Datenkompression mit Hilfe von Signaturanalysatoren.

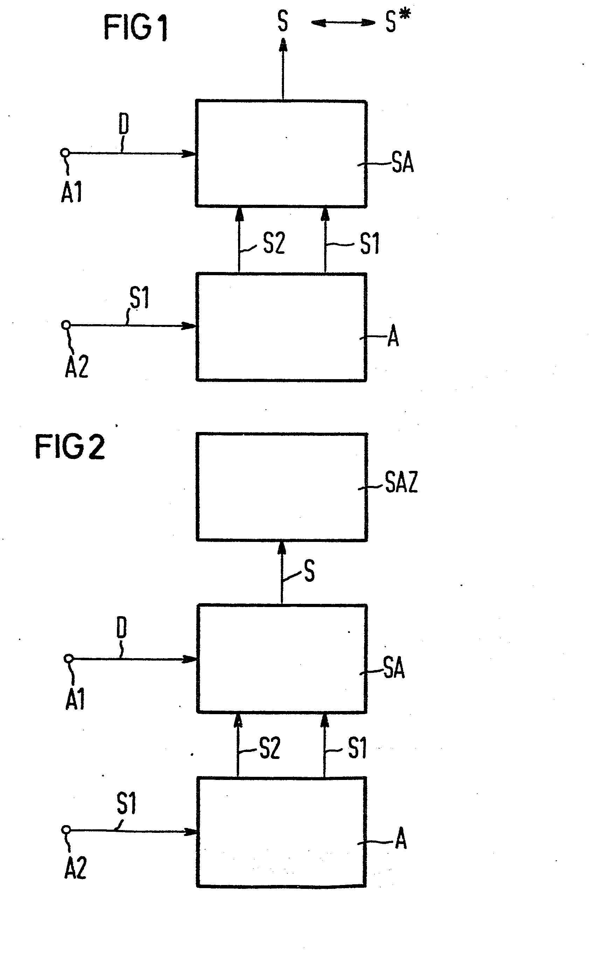

Aus einer Druckschrift der Fa. Hewlett Packard (Application Note 222-4, Guidelines for Signature Analysis, January 1981, Section 2, Page 2, Figure 2.1) sind ein Verfahren und eine Vorrichtung der eingangs genannten Art bereits bekannt. Dabei wird der Schaltung das für die Prüfung erstellte Programm eingegeben, wobei die Signalfolgen auf einer Adreß- und/oder Datenleitung mit Hilfe einer Prüfspitze abgegriffen und in einem Signaturanalysator komprimiert werden. Die jeweilige Ist-Signatur wird dann in einer Signaturanzeige als vierstellige modifizierte Hexadezimalzahl angezeigt und mit der entsprechenden Soll-Signatur verglichen. Als Signaturanalysator wird ein linear rückgekoppeltes 16-Bit-Schieberegister verwendet, an dessen Dateneingang die Prüfspitze angeschlossen ist. Der Inhalt des Schieberegisters nach vollständiger Eingabe der mit der Prüfspitze abgegriffenen Signalfolge bildet dann die Ist-Signatur.

Aus dem Aufsatz "Was ist Signaturanalyse?" in der Zeitschrift "Elektronische Rechenanlagen", 24. Jahrg. 1982, Heft 1, S. 16-18, ist es auch bereits bekannt, als Signaturanalysatoren Signaturregister mit mehreren parallelen Dateneingängen zu verwenden, so daß mehrere Adreß- und/oder Datenleitungen gleichzeitig überprüft werden können. Die mit einem derartigen Signaturregister mit parallelen Dateneingängen gebildete Signatur ist dabei äquivalent zur Exklusiv-ODER-Summe der durch Überwachung jedes Dateneinganges mit jeweils einem Signaturregister mit Einzeleingang gefundenen Signaturen.

0120443

83 P 1205 E

Der Erfindung liegt die Aufgabe zugrunde, die Funktions- prüfung von Schaltungen mit Mikroprozessoren oder Mikrocomputern mit Hilfe der Signaturanalyse so zu vereinfachen, daß mit einem möglichst geringem apparativen Aufwand und unter Verzicht auf ein spezielles Prüfprogramm die Prüfung im Echtzeitbetrieb der Schaltung vorgenommen werden kann.

Diese Aufgabe wird bei einem gattungsgemäßen Verfahren durch die kennzeichnenden Merkmale des Anspruchs 1 und bei einer gattungsgemäßen Vorrichtung durch die kennzeichnenden Merkmale des Anspruchs 4 gelöst.

Bei Schaltungen mit Mikroprozessoren oder Mikrocomputern wird im allgemeinen mit dem Einschalten ein Programm ge- startet, welches in eine Warteschleife läuft und zyklisch Eingaben abfrägt oder auf Interrupts reagiert. Der Erfindung liegt nun die Erkenntnis zugrunde, daß bei einem derartigen Programmablauf stets Programmabschnitte ausgewählt werden können, die bei fehlerfreien Schaltungen desselben Typs immer reproduzierbar und identisch sind. Der Beginn und das Ende der Signaturanalyse können dann entsprechend dem Beginn und dem Ende eines derartigen reproduzierbaren Programmabschnitts festgelegt werden, wobei die Länge des reproduzierbaren Programmabschnitts den Prüfumfang bestimmt. Für die Praxis kann davon ausgegangen werden, daß auch bei relativ kurzen reproduzierbaren Programmabschnitten sicher festgestellt werden kann, ob beispielsweise ein Mikroprozessor richtig eingesteckt wurde und im Echtzeitbetrieb der Schaltung mit dem Programmspeicher über den Systembus verkehren kann.

Bei einer bevorzugten Ausgestaltung des erfindungsgemäßen Verfahrens beginnt der ausgewählte reproduzierbare Programmabschnitt mit dem Einschalten der Schaltung und endet spätestens mit dem Eintreffen eines Interrupts.
Ein derartiger Programmabschnitt bis zum Eintreffen eines
Interrupts ist in der Regel so lange, daß eine ausreichend hohe Fehlerabdeckung gewährleistet ist. Außerdem
kann die Signaturanalyse sofort mit dem Einschalten der
Schaltung beginnen.

Bei einer weiteren Ausgestaltung des erfindungsgemäßen
Verfahrens wird ein Signaturanalysator mit mehreren
parallelen Dateneingängen verwendet, wobei jeder Dateneingang an eine zugeordnete Adreß- und/oder Datenleitung
der Schaltung angeschlossen wird. Durch die gleichzeitige
Überprüfung mehrerer Adreß- und/oder Datenleitungen wird
dann der Grad der Fehlerabdeckung noch weiter erhöht.

Vorteilhafte Ausgestaltungen der erfindungsgemäßen Vorrichtung gehen aus den Ansprüchen 5 bis 20 hervor.

Ausführungsbeispiele der Erfindung sind in der Zeichnung
dargestellt und werden im folgenden näher beschrieben.

Es zeigen:
Figur 1 das Grundprinzip der auf der Signaturanalyse beruhenden Funktionsprüfung im Echtzeitbetrieb einer
Schaltung,
Figur 2 eine Vorrichtung zur Funktionsprüfung mit einer
dem Signaturanalysator zugeordneten Signaturanzeige in stark vereinfachter schematischer Darstellung;
Figur 3 ein Schaltbild einer Vorrichtung zur Funktionsprüfung mit einem Dateneingang des Signaturanalysators,
Figur 4 ein Schaltbild einer Vorrichtung zur Funktionsprüfung mit zwei parallelen Dateneingängen des
Signaturanalysators,

0120443

Figur 5 ein Schaltbild einer Vorrichtung zur Funktionsprüfung mit vier parallelen Dateneingängen des
Signaturanalysators,

Figur 6 die bauliche Ausgestaltung der Vorrichtung nach

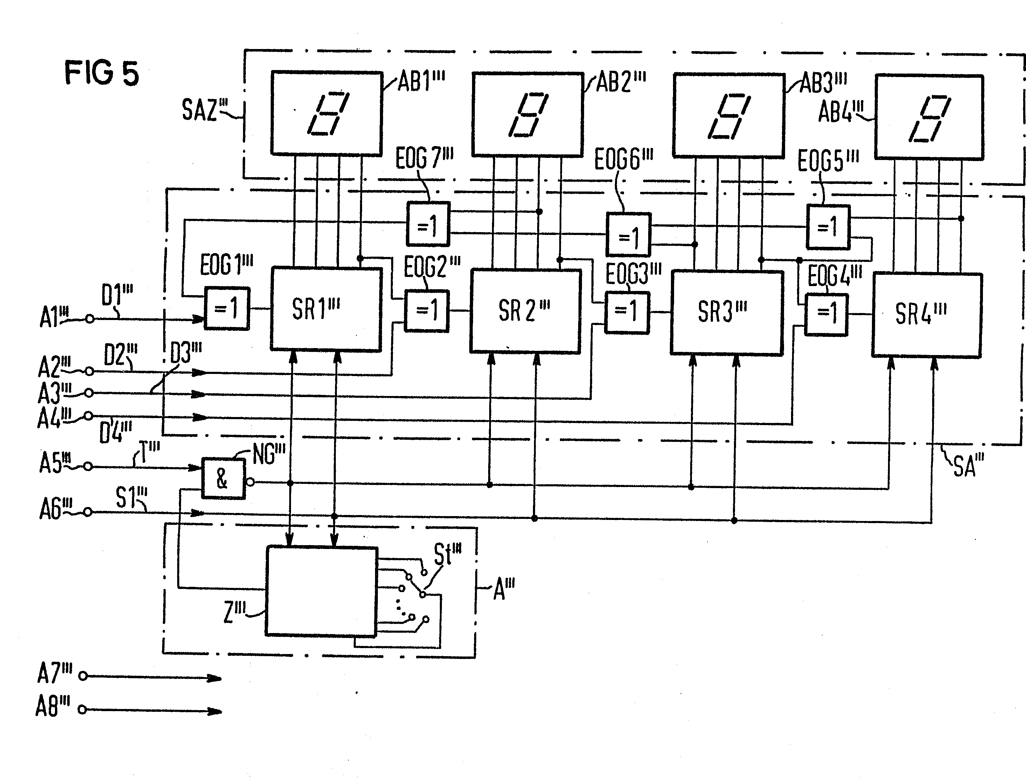

Figur 5 und

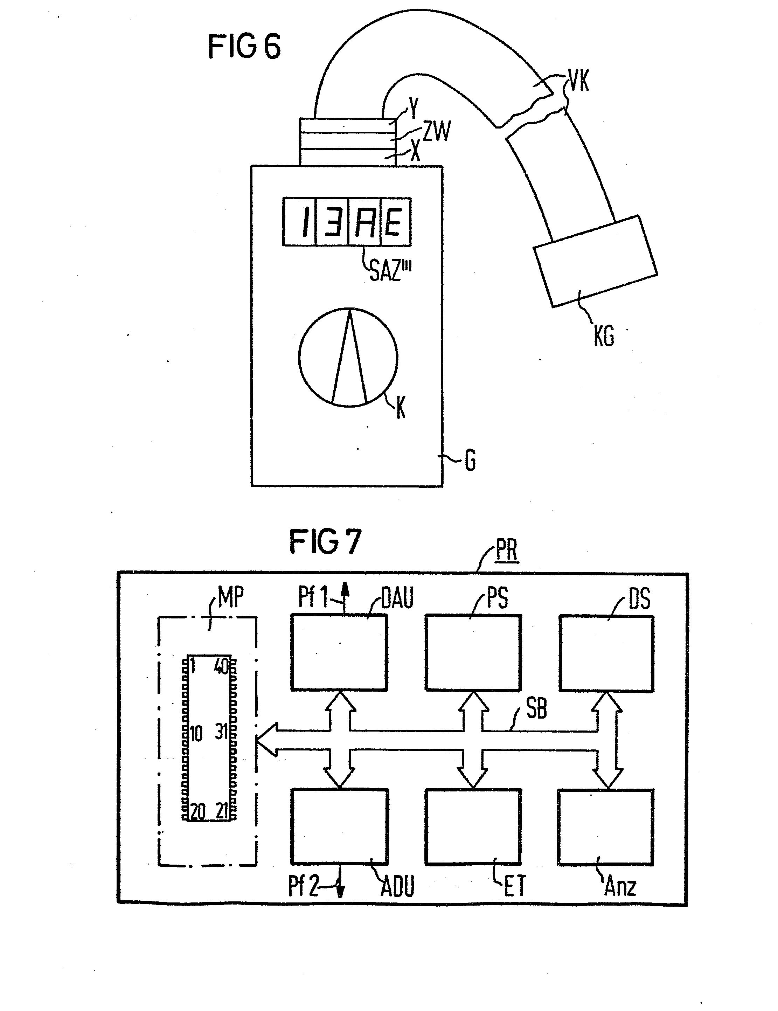

Figur 7 eine Schaltung mit einem Mikroprozessor zur Erläuterung des Einsatzes der in den Figuren 5 und
6 dargestellten Vorrichtung.

Figur 1 zeigt das Grundprinzip der Funktionsprüfung einer
Schaltung mit Mikroprozessor im Echtzeitbetrieb. Dabei
sind mit A1 und A2 zwei Anschlüsse bezeichnet, die mit
der zu prüfenden Schaltung verbunden werden. Über den
Anschluß A1 wird beispielsweise eine Datenleitung der
Schaltung kontaktiert, während der Anschluß A2 beispielsweise mit einem Schaltungspunkt kontaktiert wird, der mit
dem Einschalten der Schaltung ein Startsignal S1 abgibt.
Dieses Startsignal S1 wird einem Auswahlglied A zugeführt, welches aus dem im Echtzeitbetrieb der Schaltung
ablaufenden Programm einen reproduzierbaren Programmabschnitt auswählt. Entsprechend dem Beginn und dem Ende des
ausgewählten reproduzierbaren Programmabschnitts gibt dann
das Auswahlglied A ein Startsignal S2 bzw. ein Stoppsignal S3 an einen Signaturanalysator SA. Die über den
Anschluß A1 von einer ausgewählten Datenleitung der
Schaltung abgegriffene Datenfolge D wird dann in dem
Signaturanalysator SA komprimiert, wobei die Datenkompression mit dem Startsignal S2 beginnt und mit dem Stoppsignal S3 endet. Als komprimierte Datenfolge D wird dann
von dem Signaturanalysator SA eine Ist-Signatur S ausgegeben und mit der Soll-Signatur S* einer fehlerfreien
Schaltung verglichen. Entspricht die Ist-Signatur S der
Soll-Signatur S*, so ist die Schaltung gut, während bei
einer Abweichung zwischen Ist-Signatur S und Soll-Signatur S* die Schaltung fehlerhaft ist.

Die Signaturanalyse kann mit dem Einschalten der Schaltung beginnen, wobei die Startsignale S1 und S2 zeitlich zusammenfallen. Das Auswahlglied A ist dann auf die Länge eines reproduzierbaren Programmabschnittes derart eingestellt, daß die Signaturanalyse über das Stoppsignal S3 mit dem Ende des reproduzierbaren Programmabschnitts beendet wird. Das Ende des reproduzierbaren Programmabschnitts wird dabei spätestens durch das Eintreffen eines Interrupts bestimmt.

Die Signaturanalyse kann aber auch mit einem Interrupt beginnen, da auch nach einem derartigen Interrupt aus dem ablaufenden Programm ein reproduzierbarer Programmabschnitt ausgewählt werden kann. Der Anschluß A2 wird in diesem Fall beispielsweise mit dem Interruptausgang des Mikroprozessors der Schaltung verbunden.

Obwohl bei der vorstehend beschriebenen Funktionsprüfung nur eine ausgewählte Datenleitung der Schaltung überwacht wird, kann davon ausgegangen werden, daß bei einer genügenden Länge des reproduzierbaren Programmabschnitts auch alle anderen Adreß- und Datenleitungen der Schaltung miterfaßt werden. Wird aufgrund irgendeiner fehlerhaften Adreßleitung eine falsche Programmspeicheradresse ausgelesen, so wird der dortige Befehlscode ebenso zu erkennbaren Programmfehlern führen, wie durch fehlerhafte Datenleitungen verfälschte Befehlscodes.

Der Prüfumfang wird durch die Länge des reproduzierbaren Programmabschnitts bestimmt. Für die Praxis kann dabei davon ausgegangen werden, daß auch bei relativ kurzen Programmabschnitten bereits sicher festgestellt wird, ob ein Mikroprozessor richtig eingesteckt wurde und im Echtzeitbetrieb mit dem Programmspeicher über den Systembus verkehren kann. Dabei wird die Fehlerabdeckung um so größer,

0120443

83 P 1205 E

je länger der überwachte, reproduzierbare Programmabschnitt ist.

Die in Figur 2 dargestellte Vorrichtung zur Funktionsprüfung entspricht dem in Figur 1 dargestellten Grundprinzip. Dabei ist jedoch dem Signaturanalysator SA eine
Signaturanzeige SAZ zugeordnet, welche die ermittelte Ist-
Signatur S optisch anzeigt. Die angezeigte Ist-Signatur
S kann dann auf einfache Weise mit der an einer fehlerfreien Schaltung ermittelten oder z.B. im Stromlauf vorgegebenen Soll-Signatur verglichen werden.

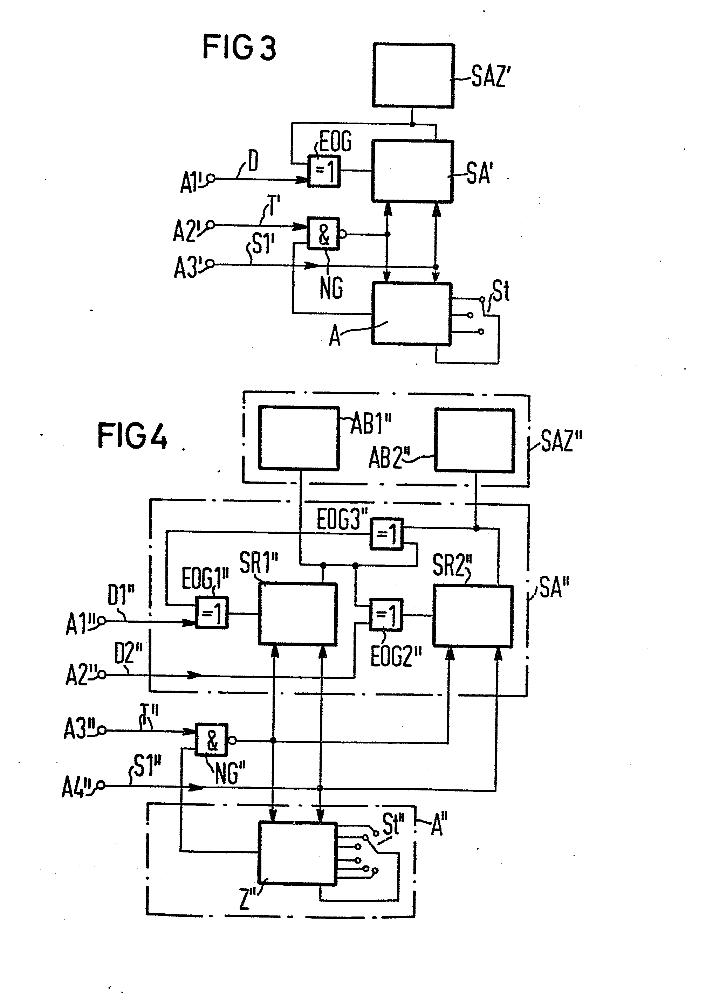

Figur 3 zeigt in stark vereinfachter schematischer Darstellung ein Schaltbild einer Vorrichtung zur Funktionsprüfung mit einem Dateneingang A1' des als linear rückgekoppeltes Signaturregister ausgebildeten Signaturanalysators SA'. Über diesen Dateneingang A1' wird beispielsweise eine ausgewählte Datenleitung der zu prüfenden
Schaltung kontaktiert und die abgegriffene Datenfolge
D' einem Eingang eines Exklusiv-ODER-Gatters EOG zugeführt. Der zweite Eingang und der Ausgang des Exklusiv-
ODER-Gatters EOG sind mit dem Ausgang bzw. Eingang des als
Signaturregister ausgebildeten Signaturanalysators SA'
verbunden. Außerdem ist der Ausgang des Signaturanalysators
SA' auch noch an eine Signaturanzeige SAZ' angeschlossen.

Neben dem Dateneingang A1' besitzt die Vorrichtung zwei
weitere Anschlüsse A2' und A3', wobei über den Anschluß
A2' ein Taktsignal T' der Schaltung und über den Anschluß
A3' ein Startsignal S1' der Schaltung abgegriffen wird.
Das Taktsignal T' wird einem Eingang eines NAND-Gatters
NG zugeführt, dessen anderer Eingang mit dem Ausgang eines
als Auswahlglied A' vorgesehenen Zählers verbunden ist. Der
Ausgang des UND-Gatters UG ist mit dem Schiebetakt-Eingang
des Signaturanalysators SA' und mit dem Zähltakt-Eingang des Auswahlgliedes A' verbunden. Das über den Anschluß A3' abgegriffene Startsignal S1' wird dem Auswahlglied A' und dem Signaturanalysator SA' als Start- und Rücksetzsignal zugeführt.

An dem als Auswahlglied A' vorgesehenen Zähler ist die Anzahl der Schiebetakte des als Signaturregister ausgebildeten Signaturanalysators SA entsprechend der Länge des ausgewählten reproduzierbaren Programmabschnitts einstellbar. Diese Einstellung der Anzahl der Schiebetakte erfolgt über einen Stufenschalter St, der im dargestellten Ausführungsbeispiel als Drei-Stufen-Schalter ausgebildet ist. Sobald die eingestellte Anzahl der Schiebetakte erreicht ist, ist auch die Datenkompression in dem Signaturanalysator SA' beendet und der Inhalt des Signaturregisters wird als Ist-Signatur in der Signaturanzeige SAZ' angezeigt.

Figur 4 zeigt ein Schaltbild einer Vorrichtung zur Funktionsprüfung mit zwei parallelen Dateneingängen A1'' und A2'' sowie zwei weiteren Anschlüssen A3'' und A4'', wobei über den Anschluß A3'' ein Taktsignal T'' der Schaltung und über den Anschluß A4'' ein Startsignal S1'' der Schaltung abgegriffen werden. Der insgesamt mit SA'' bezeichnete Signaturanalysator ist als linear rückgekoppeltes Signaturregister ausgebildet, welches zwei Schieberegister SR1'' und SR2'' sowie drei Exklusiv-ODER-Gatter EOG1'', EOG2'' und EOG3'' umfaßt. Die über den Dateneingang A1'' von einer ausgewählten ersten Datenleitung der Schaltung abgegriffene Datenfolge D1'' wird einem Eingang des Exklusiv-ODER-Gatters EOG1'' zugeführt, dessen anderer Eingang mit dem Ausgang des Exklusiv-ODER-Gatters EOG3'' verbunden ist und dessen Ausgang mit dem Eingang des Schieberegisters SR1'' verbunden ist. Die über den Dateneingang A2'' von einer ausgewählten zweiten Datenleitung der Schaltung abge-

0120443
83 P 1205 E

griffene Datenfolge D2'' wird einem Eingang des Exklusiv-ODER-Gatters EOG2'' zugeführt, dessen anderer Eingang mit dem Ausgang des Schieberegisters SR1'' und einem Eingang des Exklusiv-ODER-Gatters EOG3'' verbunden ist und dessen Ausgang mit dem Eingang des Schieberegisters SR2'' verbunden ist. Der Ausgang des Schieberegisters SR2'' ist mit dem anderen Eingang des Exklusiv-ODER-Gatters EOG3'' verbunden.

Dem Signaturanalysator SA'' ist eine insgesamt mit SAZ'' bezeichnete Signaturanzeige zugeordnet, welche aus zwei Anzeige-Bausteinen AB1'' und AB2'' besteht. Der Eingang des ersten Anzeige-Bausteins AB1'' ist mit dem Ausgang des Schieberegisters SR1!'' verbunden, während der Eingang des zweiten Anzeige-Bausteins AB2'' mit dem Ausgang des Schieberegisters SR2'' verbunden ist.

Um den Beginn und das Ende der Signaturanalyse entsprechend dem Beginn und dem Ende eines reproduzierbaren Programmabschnitts des im Echtzeitbetrieb der zu prüfenden Schaltung ablaufenden Programms vorgeben zu können, ist ein insgesamt mit A'' bezeichnetes Auswahlglied vorgesehen. Dieses Auswahlglied A'' besteht aus einem Zähler Z'', an welchem die Anzahl der Schiebetakte des als Signaturregister ausgebildeten Signaturanalysators SA'' entsprechend der Länge des ausgewählten reproduzierbaren Programmabschnitts mit Hilfe eines Stufenschalters St'' einstellbar ist. Dieser Stufenschalter St'' ist in dem dargestellten Ausführungsbeispiel als Sechs-Stufenschalter ausgebildet. Das über den Anschluß A3'' von der zu prüfenden Schaltung abgegriffene Taktsignal T'' wird einem Eingang eines NAND-Gatters NG'' zugeführt, dessen anderer Eingang mit dem Ausgang des Zählers Z'' verbunden ist und dessen Ausgang mit den Schiebetakt-Eingängen der Schieberegister SR1'' und SR2'' und mit dem Zähltakt-Eingang des Zählers Z'' verbunden ist. Das über den Anschluß A4'' von

0120443

83 P 1205 E

der zu prüfenden Schaltung abgegriffene Startsignal S1''
wird dem Zähler Z'' und den Schieberegistern SR1'' und
SR2'' des Signaturanalysators SA'' als Start- und Rücksetzsignal zugeführt.

Figur 5 zeigt ein Schaltbild einer Vorrichtung zur Funktionsprüfung mit vier parallelen Dateneingängen A1''', A2''',
A3''' und A4''' sowie mit vier weiteren Anschlüssen A5''',
A6''', A7''' und A8'''. Über den Anschluß A5''' wird ein
Taktsignal T''' der Schaltung und über den Anschluß A6'''
ein Startsignal S1''' der Schaltung abgegriffen. Über die
Anschlüsse A7''' und A8''' wird die Spannungsversorgung
der gesamten Vorrichtung von der zu prüfenden Schaltung
abgegriffen.

Der insgesamt mit SA''' bezeichnete Signaturanalysator ist
als linear rückgekoppeltes Signaturregister ausgebildet,
welches vier Vier-Bit-Schieberegister SR1''', SR2''',
SR3''' und SR4''', sowie sieben Exklusiv-ODER-Gatter
EOG1''', EOG2''', EOG3''', EOG4''', EOG5''', EOG6''' und
EOG7''' umfaßt. Die über den Dateneingang A1''' von einer
ausgewählten ersten Datenleitung der Schaltung abgegriffene
Datenfolge D1''' wird einem Eingang des Exklusiv-ODER-
Gatters EOG1''' zugeführt, dessen anderer Eingang mit dem
Ausgang des Exklusiv-ODER-Gatters EOG7''' verbunden ist und
dessen Ausgang mit dem Eingang des Vier-Bit-Schieberegisters
SR1''' verbunden ist. Die über den Dateneingang A2'' von
einer ausgewählten zweiten Datenleitung der Schaltung abgegriffene Datenfolge D2''' wird einem Eingang des Exklusiv-ODER-Gatters EOG2''' zugeführt, dessen anderer Eingang
mit einem ersten Ausgang des Vier-Bit-Schieberegisters
SR2''' und dessen Ausgang mit dem Eingang des Vier-Bit-
Schieberegisters SR2''' verbunden ist. Die über den Dateneingang A3''' von einer ausgewählten dritten Datenleitung
der Schaltung abgegriffene Datenfolge D3''' wird einem Ein-

0120443

gang des Exklusiv-ODER-Gatters EOG3''' zugeführt, dessen anderer Eingang mit einem ersten Ausgang des Vier-Bit-Schieberegisters SR2''' verbunden ist und dessen Ausgang mit dem Eingang des Vier-Bit-Schieberegisters SR3''' verbunden ist. Die über den Dateneingang A4''' von einer ausgewählten vierten Datenleitung der Schaltung abgegriffene Datenfolge D4''' wird einem Eingang des Exklusiv-ODER-Gatters EOG4''' zugeführt, dessen anderer Eingang mit einem ersten Ausgang des Vier-Bit-Schieberegisters SR3''' und mit einem Eingang des Exklusiv-ODER-Gatters EOG5''' verbunden ist und dessen Ausgang mit dem Eingang des Vier-Bit-Schieberegisters SR4''' verbunden ist.

Der andere Eingang des Exklusiv-ODER-Gatters EOG5''' ist mit einem ersten Ausgang des Vier-Bit-Schieberegisters SR4''' verbunden, während sein Ausgang mit einem Eingang des Exklusiv-ODER-Gatters EOG6''' verbunden ist. Der andere Eingang des Exklusiv-ODER-Gatters EOG6''' ist mit einem zweiten Ausgang des Vier-Bit-Schieberegisters SR3''' verbunden, während sein Ausgang mit einem Eingang des Exklusiv-ODER-Gatters EOG7''' verbunden ist. Der andere Eingang des Exklusiv-ODER-Gatters EOG7''' ist mit einem zweiten Ausgang des Vier-Bit-Schieberegisters SR2''' verbunden, während sein Ausgang -wie bereits erwähnt wurde- mit dem anderen Eingang des Exklusiv-ODER-Gatters EOG1''' verbunden ist.

Das Vier-Bit-Schieberegister SR1''' besitzt vier parallele Ausgänge, die alle mit entsprechenden Eingängen einer Hexadezimal-Anzeige AB1''' verbunden sind. Wie bereits erwähnt wurde, ist ein erster Ausgang der vier Ausgänge des Vier-Bit-Schieberegisters SR1''' gleichzeitig auch noch mit dem anderen Eingang des Exklusiv-ODER-Gatters EOG2''' verbunden.

Das Vier-Bit-Schieberegister SR2''' besitzt vier parallele
Ausgänge, die alle mit entsprechenden Eingängen einer
Hexadezimal-Anzeige AB2''' verbunden sind. Wie bereits erwähnt wurde, sind ein erster und ein zweiter Ausgang der
vier Ausgänge des Vier-Bit-Schieberegisters SR2''' gleichzeitig auch noch mit dem anderen Eingang des Exklusiv-
ODER-Gatters EOG3''' bzw. mit dem anderen Eingang des
Exklusiv-ODER-Gatters EOG7''' verbunden.

Das Vier-Bit-Schieberegister SR2''' besitzt vier parallele
Ausgänge, die alle mit entsprechenden Eingängen einer
Hexadezimal-Anzeige AB3''' verbunden sind. Wie bereits
erwähnt wurde, sind ein erster und ein zweiter Ausgang
der vier Ausgänge des Vier-Bit-Schieberegisters SR3'''
gleichzeitig auch noch mit dem anderen Eingang des
Exklusiv-ODER-Gatters EOG4''' und einem Eingang des Exklusiv-ODER-Gatters EOG5''' bzw. mit dem anderen Eingang des
Exklusiv-ODER-Gatters EOG6''' verbunden.

Das Vier-Bit-Schieberegister SR4''' besitzt vier parallele
Ausgänge, die alle mit entsprechenden Eingängen einer
Hexadezimal-Anzeige AB4''' verbunden sind. Wie bereits
erwähnt wurde, ist ein erster Ausgang der vier Ausgänge
des Vier-Bit-Schieberegisters SR4''' gleichzeitig auch
noch mit dem anderen Eingang des Exklusiv-ODER-Gatters
EOG5''' verbunden.

Die vier Hexadezimal-Anzeigen AB1''', AB2''', AB3''' und
AB4''' bilden eine insgesamt mit SAZ''' bezeichnete Signaturanzeige, welche die von dem Signaturanalysator SA'''
ermittelte Ist-Signatur als vierstellige Hexadezimalzahl
anzeigt.

Um den Beginn und das Ende der Signaturanalyse entsprechend
dem Beginn und dem Ende eines reproduzierbaren Programmabschnitts des im Echtzeitbetrieb der zu prüfenden Schaltung ablaufenden Programms vorgeben zu können, ist ein insgesamt mit A''' bezeichnetes Auswahlglied vorgesehen. Dieses Auswahlglied A3''' besteht aus einem Zähler Z''', an welchem die Anzahl der Schiebetakte des als Signaturregister ausgebildeten Signaturanalysators SA''' entsprechend der Länge des ausgewählten reproduzierbaren Programmabschnitts mit Hilfe eines Stufenschalters St''' einstellbar ist. Dieser Stufenschalter St''' ist als Stufenschalter ausgebildet, an welchen die Anzahl der Schiebetakte in elf Stufen von 31 bis 32 767 einstellbar ist. Das über den Anschluß A5''' von der zu prüfenden Schaltung abgegriffene Taktsignal T''' wird einem Eingang eines NAND-Gatters NG''' zugeführt, dessen anderer Eingang mit dem Ausgang des Zählers Z''' verbunden ist und dessen Ausgang mit den Schiebetakt-Eingängen der Vier-Bit-Schieberegister SR1''', SR2''', SR3''' und SR4''' und mit dem Zähltakt-Eingang des Zählers Z''' verbunden ist. Das über den Anschluß A6''' von der zu prüfenden Schaltung abgegriffene Startsignal S1''' wird dem Zähler Z''' und den Vier-Bit-Schieberegistern SR1''', SR2''', SR3''' und SR4''' des Signaturanalysators SA''' als Start- und Rücksetzsignal zugeführt.

Wie bereits erwähnt wurde, wird über die Anschlüsse A7''' und A8''' die Spannungsversorgung der gesamten Vorrichtung von der zu prüfenden Schaltung abgegriffen. Mit dieser abgegriffenen Spannung werden -was in der Zeichnung nicht näher dargestellt ist- die einzelnen Bausteine der Signaturanzeige SAZ''', des Signaturanalysators SA''', des Auswahlgliedes A''' und des NAND-Gatters NG''' mit Spannung versorgt.

Bei den Hexadezimal-Anzeigen AB1''', AB2''', AB3''' und AB4''' handelt es sich jeweils um Komponenten "Hexadecimal 5082 - 7340" der Firma Hewlett-Packard, 1501 Page Mill Road, Palo Alto, California 94304.

Die Bezeichnungen der übrigen Komponenten gehen aus "Pocket Guide", 8. Auflage, Band 1, Digitale Integrierte Schaltungen, Ausgabe November 1979, Texas Instruments Deutschland GmbH hervor. Demnach handelt es sich bei den Vier-Bit-Schieberegistern SR1''', SR2''', SR3''' und SR4''' jeweils um Komponenten mit der Bezeichnung "SN74LS194A". Bei den Exklusiv-ODER-Gattern EOG1''' bis EOG7''' handelt es sich jeweils um Komponenten mit der Bezeichnung "SN74LS86". Das NAND-Gatter NG''' ist ein Baustein mit der Bezeichnung "SN74LS00". Der Zähler Z''' besteht aus zwei Komponenten mit der Bezeichnung "SN74LS393".

Figur 6 zeigt die bauliche Ausgestaltung der in Figur 5 dargestellten Vorrichtung. Dabei ist in einem relativ kleinen und handlichen Gehäuse die Signaturanzeige SAZ''' und der Drehknopf K des in Figur 5 dargestellten Zwölf-Stufenschalters St''' zu erkennen. Am oberen Ende des Gehäuses E befindet sich ein gehäuseseitiges Steckerteil X, welches über eine als Zwischenstecker ausgebildete steckbare Zuordnungsplatine Zw mit einem kabelseitigen Steckerteil Y verbunden ist. Dieses kabelseitige Steckerteil Y ist seinerseits über ein bandförmiges Verbindungskabel VK mit einem Kontaktierungsclip KC verbunden. Der Kontaktierungsclip KC kann beispielsweise auf den Mikroprozessor einer zu prüfenden Schaltung aufgeklemmt werden, wobei sämtliche Anschlüsse dieses Mikroprozessors kontaktiert und über Einzelleitungen des Verbindungskabels VK mit dem kabelseitigen Steckerteil Y verbunden werden. Die steckbare Zuordnungsplatine Zw ist dann auf die zu prüfende Schaltung derart abgestimmt, daß nur die gewünschten Verbindungen mit den in Figur 5 dargestellten Dateneingängen A1''', A2''', A3''' und A4''' sowie mit den Anschlüssen A5''', A6''', A7''' und A8''' hergestellt
werden.


Zur Erläuterung des Einsatzes der in den Figuren 5 und6
dargestellten Vorrichtung ist in Figur 7 eine Schaltung
dargestellt, deren Funktion überprüft werden kann. Die insgesamt als Prüfling Pr bezeichnete Schaltung umfaßt in dem
dargestellten Ausführungsbeispiel einen Mikroprozessor MP,
einen Digital/Analog-Umsetzer DAU, einen Analog-Digital-
Umsetzer ADU, einen Programmspeicher PS, eine Eingabe-
Tastatur ET, einen Datenspeicher DS und eine Anzeige Anz,
wobei diese Komponenten über einen schematisch dargestellten Systembus SB bzw. über dessen Adreß-Daten- und
Steuerleitungen miteinander verknüpft sind. Durch einen
Pfeil Pf1 ist angedeutet, daß der Digital-Analog-Umsetzer
DAU analoge Ausgangssignale prozeßperipheren Einrichtungen
zuführt, während durch einen Pfeil Pf2 angedeutet ist, daß
dem Analog-Digital-Umsetzer analoge Eingangssignale
prozeßperipherer Einrichtungen zugeführt werden.


Innerhalb des strichpunktiert dargestellten Mikroprozessors
MP ist die konkrete Anschluß-Konfiguration des Mikroprozessor-Bausteins 8085A der Fa. Intel Corporation dargestellt (vgl. "Component Data Catalog" January 1981,
Page 6-10, Figure 2, Intel Corp., 3065 Bowers Avenue,
Santa Clara, CA 95051). Dieser Mikroprozessor-Baustein
besitzt insgesamt 40 Anschlüsse, welche durch die Ziffern
1 - 40 bezeichnet sind. Diese 40 Anschlüsse werden alle
mit Hilfe des in Figur 6 dargestellten Kontaktierungsclips KC kontaktiert, wobei der Mikroprozessor-Baustein
in der Schaltung eingesteckt bleibt. Über die als Zwischenstecker ausgebildete und dem Mikroprozessor-Baustein
8085A zugeordnete steckbare Zuordnungsplatine Zw werden
dann folgende Verbindungen mit der in Figur 5 dargestellten
Schaltung hergestellt:

1. Der als "$AD_0$" bezeichnete Anschluß 12 wird mit dem Dateneingang A1''' verbunden.

2. Der als "$AD_2$" bezeichnete Anschluß 14 wird mit dem Dateneingang A2''' verbunden.

3. Der als "$AD_7$" bezeichnete Anschluß 19 wird mit dem Dateneingang A3''' verbunden.

4. Der als "$A_{15}$" bezeichnete Anschluß 28 wird mit dem Dateneingang A3''' verbunden.

5. Der als "ALE" bezeichnete Anschluß 30 wird mit dem Anschluß A5''' verbunden.

6. Der als "RESET OUT" bezeichnete Anschluß 3 wird mit dem Anschluß A6''' verbunden.

7. Der als "$V_{CC}$" bezeichnete Anschluß 40 wird mit dem Anschluß A7''' verbunden.

8. Der als "$V_{SS}$" bezeichnete Anschluß 20 wird mit dem Anschluß A8''' verbunden.


Bei der Funktionsprüfung der Schaltung Pr werden also die vorstehend genannten Verbindungen allein durch das Aufklemmen des Kontaktierungsclips KC und durch die Verwendung der dem Mikroprozessor-Bausteins 8085A zugeordneten Zuordnungsplatine Zw realisiert. An dem in Figur 6 dargestellten Drehknopf K braucht dann nur noch die Anzahl der Schiebetakte so eingestellt zu werden, daß die Signaturanalyse spätestens mit dem Ende eines reproduzierbaren Programmabschnitts beendet wird. Der Beginn der Signaturanalyse erfolgt selbsttätig mit dem Einschalten der Schaltung Pr. Auf besondere Maßnahmen zur Erzeugung eines die Signaturanalyse beendenden Stoppsignals in der zu prüfenden Schaltung Pr kann also verzichtet werden.


20 Patentansprüche

7 Figuren

Patentansprüche

1. Verfahren zur Funktionsprüfung von Schaltungen mit Mikroprozessoren oder Mikrocomputern, bei welchem ein Signaturanalysator an mindestens eine Adreß- und/oder Datenleitung der Schaltung angeschlossen wird und dann die vom Signaturanalysator ermittelte Istsignatur mit der Sollsignatur einer fehlerfreien Schaltung verglichen wird, dadurch g e k e n n z e i c h n e t , daß

a) aus dem im Normalbetrieb der Schaltung ablaufenden Programm ein reproduzierbarer Programmabschnitt ausgewählt wird und dann

b) der Beginn und das Ende der Signaturanalyse entsprechend dem Beginn und dem Ende des reproduzierbaren Programmabschnitts festgelegt werden.

2. Verfahren nach Anspruch 1, dadurch g e k e n n - z e i c h n e t , daß der ausgewählte reproduzierbare Programmabschnitt mit dem Einschalten der Schaltung beginnt und spätestens mit dem Eintreffen eines Interrupts endet.

3. Verfahren nach Anspruch 1 oder 2, dadurch g e - k e n n z e i c h n e t , daß ein Signaturanalysator (SA''; SA''') mit mehreren parallelen Dateneingängen (A1'', A2''; A1''', A2''', A3''', A4''') verwendet wird und daß jeder Dateneingang an eine zugeordnete Adreß- und/oder Datenleitung der Schaltung angeschlossen wird.

4. Vorrichtung zur Funktionsprüfung von Schaltungen mit Mikroprozessoren oder Mikrocomputern, mit einem Signaturanalysator, welcher an mindestens eine Adreß- und/oder Datenleitung der Schaltung anschließbar ist, wobei eine vom Signaturanalysator ermittelte Istsignatur mit der

Sollsignatur einer fehlerfreien Schaltung vergleichbar ist, dadurch g e k e n n z e i c h n e t , daß dem Signaturanalysator (SA; SA'; SA''; SA''') ein Auswahlglied (A; A'; A''; A''') zugeordnet ist, über welches der Beginn und das Ende der Signaturanalyse entsprechend dem Beginn und dem Ende eines reproduzierbaren Programmabschnitts des in der Schaltung ablaufenden Programms vorgebbar sind.

5. Vorrichtung nach Anspruch 4, dadurch g e k e n n z e i c h n e t , daß der Signaturanalysator (SA''; SA''') als Signaturregister mit mehreren parallelen Dateneingängen (A1'', A2''; A1''', A2''', A3''', A4''') ausgebildet ist und daß jeder Dateneingang an eine zugeordnete Adreß- und/oder Datenleitung der Schaltung anschließbar ist.

6. Vorrichtung nach Anspruch 5, dadurch g e k e n n z e i c h n e t , daß das Signaturregister vier parallele Dateneingänge (A1''', A2''', A3''', A4''') besitzt.

7. Vorrichtung nach Anspruch 5 oder 6, dadurch g e k e n n z e i c h n e t , daß das Signaturregister als linear rückgekoppeltes 16-Bit Schieberegister ausgebildet ist.

8. Vorrichtung nach einem der Ansprüche 4 bis 7, dadurch g e k e n n z e i c h n e t , daß dem Signaturanalysator (SA; SA'; SA''; SA''') eine Signaturanzeige (SAZ; SAZ'; SAZ''; SAZ''') zugeordnet ist.

9. Vorrichtung nach Anspruch 8, dadurch g e k e n n z e i c h n e t , daß die Signaturanzeige (SAZ''') als Hexadezimalanzeige ausgebildet ist.

10. Vorrichtung nach einem der Ansprüche 4 bis 9, dadurch g e k e n n z e i c h n e t , daß als Auswahlglied (A'; A''; A''') ein Zähler (Z''; Z''') vorgesehen
ist, an welchem die Anzahl der Schiebetakte des als
Signaturregister ausgebildeten Signaturanalysators (SA';
SA''; SA''') entsprechend der Länge des reproduzierbaren
Programmabschnitts einstellbar ist.

11. Vorrichtung nach Anspruch 10, dadurch g e k e n n -
z e i c h n e t , daß die Anzahl der Schiebetakte über
einen Stufenschalter (St, St'', St''') einstellbar ist.

12. Vorrichtung nach Anspruch 10 oder 11, dadurch
g e k e n n z e i c h n e t , daß ein von der Schaltung
abgreifbares Taktsignal (T'; T''; T''') als Schiebetakt
für das Signaturregister und als Zähltakt für den Zähler
(Z''; Z''') dient.

13. Vorrichtung nach Anspruch 12, dadurch g e k e n n -
z e i c h n e t , daß das von der Schaltung abgreifbare
Taktsignal (T'; T''; T''') einem Eingang eines NAND-
Gatters (NG; NG''; NG''') zuführbar ist, daß der andere
Eingang des NAND-Gatters mit dem Ausgang des Zählers
(Z''; Z''') verbunden ist und daß der Ausgang des UND-
Gatters mit dem Schiebetakt-Eingang des Signaturregisters
und mit dem Zähltakt-Eingang des Zählers verbunden ist.

14. Vorrichtung nach einem der Ansprüche 4 bis 13,
dadurch g e k e n n z e i c h n e t , daß der Beginn
der Signaturanalyse durch ein von der Schaltung abgreifbares Startsignal (S1; S1'; S1''; S1''') vorgebbar ist.

15. Vorrichtung nach Anspruch 14, dadurch g e k e n n -
z e i c h n e t , daß der Beginn der Signaturanalyse
durch ein beim Einschalten der Schaltung auftretendes Startsignal (S1; S1'; S1''; S1''') vorgebbar ist.

16. Vorrichtung nach Anspruch 10 und 14 oder 15, dadurch g e k e n n z e i c h n e t , daß das Startsignal (S1; S1'; S1''; S1''') gleichzeitig das Rücksetzsignal für das Signaturregister und für den Zähler (Z''; Z''') bildet.

17. Vorrichtung nach einem der Ansprüche 4 bis 16, dadurch g e k e n n z e i c h n e t , daß die Versorgungsspannung für die gesamte Vorrichtung an der Schaltung abgreifbar ist.

18. Vorrichtung nach einem der Ansprüche 4 bis 17, dadurch g e k e n n z e i c h n e t , daß die Verbindungen mit der Schaltung durch ein Verbindungskabel (VK) und einem auf den Mikroprozessor oder den Mikrocomputer (MC) der Schaltung aufsetzbaren Kontaktierungsclip (KC) herstellbar sind.

19. Vorrichtung nach Anspruch 18, dadurch g e k e n n z e i c h n e t , daß mit dem Kontaktierungsclip (KC) sämtliche Anschlüsse des Mikroprozessors (MP) oder Mikrocomputers kontaktierbar sind und daß die gewünschten Verbindungen über eine steckbare Zuordnungsplatine (Zw) herstellbar sind.

20. Vorrichtung nach einem der Ansprüche 4 bis 19, dadurch g e k e n n z e i c h n e t , daß insgesamt vier Dateneingänge (A1''', A2''', A3''', A4''') ein Eingang (A5''') für ein Taktsignal (T''') ein Eingang (A6''') für ein Start- bzw. Rücksetzsignal (S1''') und zwei Anschlüsse (A7''', A8''') für die Spannungsversorgung an die Schaltung anschließbar sind.

0120443

FIG 1

FIG 2

FIG 3

FIG 4

FIG 5

0120443

0120443

FIG 6

FIG 7